(19) Europäisches Patentamt / European Patent Office / Office européen des brevets

(11) **EP 4 166 299 A1**

(12) **EUROPEAN PATENT APPLICATION**
published in accordance with Art. 153(4) EPC

(43) Date of publication:
**19.04.2023 Bulletin 2023/16**

(21) Application number: **21821105.0**

(22) Date of filing: **08.06.2021**

(51) International Patent Classification (IPC):
**B29B 11/16** (2006.01)    **B29K 105/12** (2006.01)
**C08K 7/02** (2006.01)    **C08L 101/00** (2006.01)

(52) Cooperative Patent Classification (CPC):
(C-Sets available)
**B29B 7/726; B29B 7/007; B29B 7/90; B29B 11/16;
B32B 1/08; B32B 7/12; B32B 15/08; B32B 15/18;
B32B 15/20; B32B 27/18; B32B 27/302;
B32B 27/304; B32B 27/32; B32B 27/34;
B32B 27/36;** (Cont.)

(86) International application number:
**PCT/JP2021/021688**

(87) International publication number:
**WO 2021/251362 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.06.2020 JP 2020100884**

(71) Applicant: **Furukawa Electric Co., Ltd.**
**Tokyo 100-8322 (JP)**

(72) Inventors:
• **HARA, Hidekazu**
**Tokyo 100-8322 (JP)**
• **KIM, Jae Kyung**
**Tokyo 100-8322 (JP)**

• **SAKATO, Jiro**
**Tokyo 100-8322 (JP)**
• **HIROISHI, Jirou**
**Tokyo 100-8322 (JP)**
• **SUZUKI, Toshihiro**
**Tokyo 100-8322 (JP)**
• **TAZUKE, Masami**
**Tokyo 100-8322 (JP)**
• **IKEUCHI, Masato**
**Tokyo 100-8322 (JP)**
• **YAMAZAKI, Kyosuke**
**Tokyo 100-8322 (JP)**
• **YABUNAKA, Kentaro**
**Tokyo 100-8322 (JP)**

(74) Representative: **Forstmeyer, Dietmar et al**
**Boeters & Lieck**
**Oberanger 32**
**80331 München (DE)**

(54) **FIBER-DISPERSING RESIN COMPOSITE MATERIAL, MOLDED BODY, AND COMPOSITE MEMBER**

(57) A fiber-dispersed resin composite material, containing fiber dispersed in a resin, wherein the content of the fiber in the fiber-dispersed resin composite material is 1 mass% or more and less than 70 mass%, and wherein when a length-weighted average fiber length and a number-averaged fiber length of the fiber as determined under conditions below are set to LL and LN, respectively, LL and LN satisfy [Expression 1-1] below:
<Conditions>
LL and LN are determined for a dissolution residue obtained by immersing the fiber-dispersed resin composite material in a solvent miscible with the resin in the composite material, in accordance with Pulps-Determination of fiber length by automated optical analysis as specified by ISO 16065 2001, and

[Expression 1-1] $1.01 < (LL/LN) < 1.30$.

**(Cont. next page)**

(52) Cooperative Patent Classification (CPC): (Cont.)
**C08K 7/02; C08L 23/12; C08L 97/02;
C08L 101/00;** B29B 7/48; B29B 7/82;
B32B 2255/06; B32B 2262/065; B32B 2262/067;
B32B 2264/02; B32B 2264/1052; B32B 2272/00;
B32B 2307/54; B32B 2307/546; B32B 2307/718;
B32B 2307/7265

C-Sets
**C08L 23/12, C08L 97/02;
C08L 97/02, C08L 23/12;
C08L 97/02, C08L 23/12, C08L 51/06**

**Description**

FIELD OF THE INVENTION

The present invention relates to a fiber-dispersed resin composite material, a molding, and a composite member.

In order to improve mechanical properties of resin products, fiber-reinforced resins formed by blending reinforcing fiber (e.g., glass fiber, ceramic fiber, synthetic resin fiber, carbon fiber, cellulose fiber) in a resin have been known. Among them, plant fiber is light-weight, leaves less combustion residues during, for instance, thermal recycling, is also relatively inexpensive, and is thus advantageous in view of weight reduction, recycling efficiency, cost performance, and others. Technologies related to fiber-reinforced resins using plant fiber have been reported.

For example, Patent Literature 1 describes a composite material obtained by kneading, with a matrix resin, a composite material in which wax is adhered to dried waste pulp fiber subjected to defibration treatment, wherein the defibrated waste pulp fiber has a length-weighted average fiber length of from 0.1 to 5.0 mm.

Patent Literature 2 discloses a resin composition including a high flow rate polyolefin resin having a specific melt index and plant fiber in order to enhance the processability of a material obtained by mixing plant fiber with a polyolefin resin.

Patent Literature 2 discloses a wood fiber-containing resin composition containing specific amounts of a thermoplastic resin, a wood fiber substance, and a (meth) acrylate-based polymer, and shows that the discharge amount during extrusion increases, and the flexural strength of a molding also becomes high.

CITATION LIST

PATENT LITERATURE

Patent Literature 1: WO 2012/070616
Patent Literature 2: JP-A-61-225234 ("JP-A" means an unexamined published Japanese patent application)
Patent Literature 3: JP-A-2003-277621

SUMMARY OF THE INVENTION

TECHNICAL PROBLEM

In each fiber-reinforced resin, the fiber and the resin are incompatible, and there is a restriction in improving dispersibility of the fiber in the resin. As a result, in the existing fiber-reinforced resins, it cannot be said that the effect of reinforcing each resin by the fiber is sufficiently exerted.

The present invention provides a fiber-dispersed resin composite material that sufficiently elicits an effect of reinforcing a resin by fiber and excels in mechanical properties such as tensile strength and flexural strength. The present invention also provides a molding or composite member using the composite material.

SOLUTION TO PROBLEM

The above problems of the present invention have been solved by the following solutions.

[1] A fiber-dispersed resin composite material, containing fiber dispersed in a resin,

wherein the content of the fiber in the fiber-dispersed resin composite material is 1 mass% or more and less than 70 mass%, and
wherein when a length-weighted average fiber length and a number-averaged fiber length of the fiber as determined under conditions below are set to LL and LN, respectively, LL and LN satisfy [Expression 1-1] below:
<Conditions>
LL and LN are determined for a dissolution residue obtained by immersing the fiber-dispersed resin composite material in a solvent miscible with the resin in the composite material, in accordance with Pulps-Determination of fiber length by automated optical analysis as specified by ISO 16065 2001, and

$$[\text{Expression 1-1}] \quad 1.01 < LL/LN < 1.30.$$

[2] The fiber-dispersed resin composite material described in [1], wherein the LL and the LN satisfy [Expression 1-3] below:

$$[\text{Expression 1-3}] \quad 1.02 < LL/LN \leq 1.10.$$

[3] The fiber-dispersed resin composite material described in [1] or [2], wherein a length-weighted average fiber length of the fiber is 0.25 mm or more.
[4] The fiber-dispersed resin composite material described in any one of [1] to [3], wherein the content of the fiber in the fiber-dispersed resin composite material is 5 mass% or more and less than 50 mass%.
[5] The fiber-dispersed resin composite material described in any one of [1] to [4], wherein the fiber contains plant fiber.
[6] The fiber-dispersed resin composite material described in any one of [1] to [5], wherein the fiber contains wood fiber.
[7] The fiber-dispersed resin composite material described in [6], wherein the wood fiber contains cellulose, hemicellulose, and lignin.
[8] The fiber-dispersed resin composite material described in any one of [1] to [7], wherein the resin contains one or two or more kinds of a polyolefin resin, an acrylonitrile-butadiene-styrene copolymer resin, an acrylonitrile-styrene copolymer resin, a polyamide resin, a polyvinyl chloride resin, a polyethylene terephthalate resin, a polybutylene terephthalate resin, a polystyrene resin, a 3-hydroxybutyrate-co-3-hydroxyhexanoate polymer resin, a polybutylene succinate resin, and a polylactic acid resin.
[9] The fiber-dispersed resin composite material described in any one of [1] to [8],

wherein the resin contains a polyolefin resin, and
wherein under the conditions determining the LL and the LN, the dissolution residue obtained by immersing the fiber-dispersed resin composite material in a solvent miscible with the resin in the fiber-dispersed resin composite material is a hot xylene dissolution residue.

[10] The fiber-dispersed resin composite material described in any one of [1] to [9], containing aluminum dispersed in the resin.
[11] The fiber-dispersed resin composite material described in any one of [1] to [10], containing one or more kinds of compounds of a metal salt of an organic acid, an organic acid, and silicone.
[12] The fiber-dispersed resin composite material described in any one of [1] to [11], containing resin particles dispersed in the resin dispersing the fiber contained in the fiber-dispersed resin composite material,
wherein the resin particles are made of a resin different from the resin dispersing the fiber contained in the fiber-dispersed resin composite material.
[13] The fiber-dispersed resin composite material described in any one of [1] to [12], wherein at least part of the resin and/or at least part of the fiber is derived from a recycled material.
[14] A molding, which is obtainable by using the fiber-dispersed resin composite material described in any one of [1] to [13].
[15] A composite member, containing: the molding described in [14]; and another material in combination.

ADVANTAGEOUS EFFECTS OF INVENTION

A fiber-dispersed resin composite material of the present invention or a molding or composite member using the composite material sufficiently elicits an effect of reinforcing a resin by fiber, and excels in mechanical properties such as tensile strength and flexural strength.

DESCRIPTION OF EMBODIMENTS

Preferable embodiments of the present invention will be described.

[Fiber-dispersed resin composite material]

In a fiber-dispersed resin composite material of the present invention (hereinafter, also simply referred to as "composite material of the present invention"), fiber is dispersed in a resin, and the content of the fiber in the composite material (100 mass%) of the present invention is 1 mass% or more and less than 70 mass%. When the content of the fiber is within this range, the fiber length distribution of the fiber can be controlled by setting melt-kneading conditions described later. In addition, the fiber can be dispersed highly homogeneously. As a result, it is possible to sufficiently elicit the effect of reinforcing a resin by the fiber. The composite material of the present invention may be shaped by including, for instance, inorganic matter such as aluminum and/or various additives depending on the kind(s) of raw material(s) used.

In the composite material of the present invention, when the length-weighted average fiber length and the number-averaged fiber length of the fiber as measured under conditions below are taken as LL and LN, respectively, LL and LN preferably satisfy the following [Expression 1-1]:

$$[\text{Expression 1-1}] \quad 1.01 < LL/LN < 1.30.$$

The above LL and LN are determined for a dissolution residue (insoluble component) obtained by immersing the fiber-dispersed resin composite material in a solvent miscible with the resin in the composite material, in accordance with Pulps-Determination of fiber length by automated optical analysis as specified by ISO 16065 2001 (JIS P8226 2006).

Incidentally, the solvent miscible with a resin in the composite material can be selected, if appropriate, according to the type of the resin in the composite material. When the resin is a polyolefin, examples include, but are not limited to, a hot xylene (at 130 to 150°C) as long as the solvent is miscible with the resin in the composite material and immiscible with fiber.

More specifically, the above LL and LN are derived from the following formulas where LL is the fiber length-weighted average fiber length.

$$LL = (\Sigma n_i l_i^2)/(\Sigma n_i l_i).$$

$$LN = (\Sigma n_i l_i)/(\Sigma n_i).$$

Here, $n_i$ is the number of fibers in the i-th length range, and $l_i$ is the central value in the i-th length range.

LL/LN is an indicator expressing how the fiber length distribution spreads. A larger LL/LN indicates that the fiber length distribution spreads broadly, whereas a smaller LL/LN indicates a narrower fiber length distribution.

When the composite material of the present invention satisfies 1.01 < LL/LN < 1.30, the fiber-mediated reinforcing action can be sufficiently exerted, and the mechanical strength of the composite material can be effectively enhanced. When the LL/LN is large, the fiber length distribution is wide, and the proportion of fibers having a length shorter than the average fiber length increases. Meanwhile, when the LL/LN is small, the fiber length distribution is narrow, and the proportion of long fibers relatively decreases. The composite material of the present invention is configured such that the relationship between the LL and LN satisfies the above [Expression 1-1].

From the viewpoint of further enhancing the mechanical strength, LL/LN is preferably greater than 1.02, preferably greater than 1.03, or preferably greater than 1.04. Thus, it is preferable to satisfy 1.02 < LL/LN < 1.30, it is also preferable to satisfy 1.03 < LL/LN < 1.30, or it is also preferable to satisfy 1.04 < LL/LN < 1.30.

When the LL/LN is too large, the proportion of fiber having a length longer than the average fiber length increases. On the other hand, the proportion of short fiber also increases as described above. This is likely to cause unevenness or a decrease in the mechanical strength. The fluidity is also likely to decrease. From this point of view, LL/LN is preferably smaller than 1.25, preferably smaller than 1.20, preferably smaller than 1.15, or preferably 1.10 or less. Thus, it is preferable to satisfy 1.01 < LL/LN < 1.25, it is also preferable to satisfy 1.01 < LL/LN < 1.2, it is also preferable to satisfy 1.02 < LL/LN < 1.15, or it is also preferable to satisfy 1.01 < LL/LN ≤ 1.10.

In consideration of improvement in both mechanical strength and fluidity, LL/LN preferably satisfies [Expression 1-2] below, and more preferably satisfies [Expression 1-3].

$$[\text{Expression 1-2}] \quad 1.01 < LL/LN < 1.20$$

$$[\text{Expression 1-3}] \quad 1.02 < LL/LN \leq 1.10$$

For instance, the fiber length of the fiber in the composite material can be measured to some extent by observing the surface of the composite material or a thin film obtained, for example, by slicing or pressing the composite material. However, with such a method of measuring the two-dimensional observation surface, it is impossible to accurately measure all the fiber lengths of individual fibers dispersed in the resin because the observation surface is limited to a specific surface. This is because fibers in the composite material include at least fibers present overlapping in the thickness direction of the thin film, or fibers arranged and inclined with respect to the observation surface. It can be considered to measure the fiber length by analysis of a transmission tomographic image obtained using, for instance, X-ray or CT. However, the contrast of the fiber in the composite material is not necessarily clear actually, and accurate measurement of the fiber length is difficult accordingly. The present inventors accurately measured the fiber length distribution of the cellulose fiber in the composite material, found the technical relationship between the measured value and the mechanical properties of the composite material, which has not been conventionally known, and thus completed the present invention based on such findings.

In the composite material of the present invention, when the weight-weighted (length•length-weighted) average fiber length of the fiber is taken as LW, LW and the above LN preferably satisfy the following [Expression 2-1].

$$[\text{Expression 2-1}] \quad 1.01 < LW/LN < 3.0.$$

The above LW, like LL and LN, is also determined for a dissolution residue (insoluble component) obtained by immersing the fiber-dispersed resin composite material in a solvent miscible with the resin in the composite material, in accordance with Pulps-Determination of fiber length by automated optical analysis as specified by ISO 16065 2001 (JIS P8226 2006).

More specifically, the above LW is derived from a formula below. LW is the average fiber length weighted by the square of the length of the fiber.

$$LW = (\Sigma n_i l_i^3)/(\Sigma n_i l_i^2)$$

Here, $n_i$ is the number of fibers in the i-th length range, and $l_i$ is the central value in the i-th length range.

LW/LN is an indicator expressing how the fiber length distribution spreads. A larger LW/LN indicates that the fiber length distribution spreads more, whereas a smaller LW/LN indicates a narrower fiber length distribution. There may be many fibers with a long fiber length. In this case, the value for LW/LN increases more steeply than the value for LL/LN. Thus, LW/LN is an indicator expressing the degree of how the fiber length distribution on its longer side spreads. LW/LN preferably satisfies [Expression 2-2] below, and also preferably satisfies [Expression 2-3].

$$[\text{Expression 2-2}] \quad 1.02 < LW/LN < 2.5$$

$$[\text{Expression 2-3}] \quad 1.05 < LW/LN < 2.0$$

In the composite material of the present invention, the content of the fiber in the composite material (100 mass%) is 1 mass% or more and less than 70 mass%. From the viewpoint of improving the mechanical properties, the content of the fiber in the composite material is more preferably 3 mass% or more, further preferably 5 mass% or more, further preferably 10 mass% or more, and further preferably 15 mass% or more. Also, in consideration of further improving the flexural strength, the content of the fiber in the composite material is preferably 25 mass% or more.

From the viewpoint of increasing fluidity and suppressing water absorbency in the composite material of the present invention, the content of fiber in the composite material is preferably less than 60 mass%, preferably less than 50 mass%, more preferably less than 40 mass%, or preferably less than 35 mass%.

In the composite material of the present invention, the content of fiber is preferably 5 mass% or more and less than 50 mass%, preferably 10 mass% or more and less than 40 mass%, or preferably 15 mass% or more and less than 35 mass%.

The composite material of the present invention is suitable as a material constituting a molding (resin product) that requires mechanical strength at a predetermined level or more. The composite material of the present invention excels in mechanical strength because the fiber in the composite material satisfies the above relationship of [Expression 1-1]. The reason for this is not clear, but it is presumed that, for example, reinforcing effects provided by the fiber against moderate deformation and rapid deformation depend on the specific length of the fiber, and improvement in the mechanical strength is achieved by adjusting the fiber length distribution of the fiber to a specific range, thereby providing appropriate unevenness in the fiber length.

The fiber dispersed in the composite material of the present invention preferably includes fiber having a fiber length of 0.25 mm (250 μm) or more. Mechanical strength such as flexural strength can be further improved by including the fiber having a fiber length of 0.25 mm or more. From this viewpoint, it is more preferable to include fiber having a fiber length of 0.3 mm or more.

In the composite material of the present invention, the length-weighted average fiber length of the fiber in the composite material is preferably 0.25 mm (250 µm) or more. Mechanical strength such as flexural strength can be further improved by adjusting the length-weighted average fiber length to 0.25 mm or more. From this viewpoint, the length-weighted average fiber length of the fiber is more preferably 0.3 mm or more. From the viewpoint of obtaining high fluidity, the length-weighted average fiber length of the fiber in the composite material is preferably 1.0 mm or less, more preferably 0.8 mm or less, further preferably 0.6 mm or less, preferably 0.5 mm or less, or also preferably 0.4 mm or less.

Examples of the fiber constituting the composite material of the present invention include plant fiber, synthetic resin fiber, glass fiber, ceramic fiber, and carbon fiber. From the viewpoint of effective utilization of natural resources, plant fiber is preferable. Examples of the plant fiber include wood fiber and cellulose fiber. From the viewpoint of stability of the mechanical strength, cellulose fiber or synthetic resin fiber is preferable. From the viewpoint of effective utilization of waste materials, wood fiber or cellulose fiber is preferable, and wood fiber is more preferable. Wood fiber usually contains cellulose, hemicellulose (water-immiscible polysaccharides other than cellulose), and lignin. In addition, one or more kinds of fiber may be included in the composite material of the present invention.

Examples of the wood fiber material that can be used include lumber, wood, modified wood, or crushed wood, or a wood processed product using crushed wood (e.g., a fiberboard, MDF (medium-density fiberboard), particle board), and a pulverized material thereof. Examples of the cellulose fiber material that can be used include those mainly composed of cellulose. More specific examples include pulp, paper, wastepaper, paper dust, recycled pulp, paper sludge, laminated paper, broken paper of laminated paper, and packaging using laminated paper.

The fiber contained in the composite material of the present invention may be plant fiber. In this case, the content (mass%) of the plant fiber contained in the composite material is determined using a value obtained by thermogravimetric analysis as follows.

<Procedure for determining content of plant fiber>

A composite material sample (10 mg) which has been dried in advance under the atmosphere at 80°C for 1 hour is subjected to a thermogravimetric analysis (TGA) from 23°C to 400°C under a nitrogen atmosphere at a heating rate of +10°C/min. Then, the content of plant fiber (mass%) is calculated by the following [Formula I]:

[Formula I]

(content [mass%] of plant fiber) = (decrease [mg] in mass of composite material sample at 200 to 380°C) × 100/(mass [mg] of composite material sample in dried state before thermogravimetric analysis)

Incidentally, when the temperature is raised to 200 to 380°C under a nitrogen atmosphere at a heating rate of +10°C/min, almost all of the plant fiber is thermally decomposed and lost. As used herein, the mass% calculated by the above [Formula I] is taken as the content of the plant fiber contained in the composite material. However, part of the plant fiber is not lost and remains within this temperature range (in some cases), but when the temperature exceeds this temperature range, the fiber content is indistinguishable from thermolysis loss or remaining components in a case where resin components are lost or compounds degradable at high temperatures are present together, for example, and as a result, it is difficult to measure the plant fiber amount. Accordingly, as used herein, the mass% calculated by [Formula I] is used for determining the plant fiber amount. The relationship between the plant fiber amount as so calculated and the mechanical properties of the composite material is highly relevant.

That is, when the fiber contained in the composite material of the present invention is cellulose fiber, the content of the cellulose fiber can be determined by [Formula I]. In addition, when the fiber contained in the composite material of the present invention is wood fiber, the content of the wood fiber can be determined by [Formula I].

When the composite material of the present invention contains plant fiber, the proportion of the plant fiber among the fibers in the composite material is preferably 50 mass% or more, more preferably 70 mass% or more, further preferably 80 mass% or more, and further preferably 90 mass%. It is also preferable that all the fibers in the composite material are plant fiber.

Examples of the resin constituting the composite material of the present invention include each thermoplastic resin and thermosetting resin, and the resin preferably contains a thermoplastic resin in view of formability. Specific examples thereof include a polyolefin resin such as a polyethylene resin or a polypropylene resin; a thermoplastic resin such as a polyvinyl chloride resin, an acrylonitrile-butadiene-styrene copolymer resin (ABS resin), an acrylonitrile-styrene copolymer resin (AS resin), a polyamide resin (nylon), a polyethylene terephthalate resin, a polybutylene terephthalate resin, and a polystyrene resin; and a thermoplastic biodegradable resin such as a 3-hydroxybutyrate-co-3-hydroxyhexanoate polymer resin (PHBH), a polybutylene succinate resin, and a polylactic acid resin. One or two or more kinds of these resins can be used for the composite material of the present invention. Among them, the resin of the composite material preferably contains a polyolefin resin, and 50 mass% or more (preferably 70 mass% or more) of the resin constituting the composite material is preferably a polyolefin resin.

The polyolefin resin is preferably a polyethylene resin or a polypropylene resin, or preferably a mixture of a polyethylene resin and a polypropylene resin (resin blend). Further, an ethylene-based copolymer such as an ethylene-vinyl acetate copolymer, an ethylene-ethyl acrylate copolymer, an ethylene-methyl methacrylate copolymer, an ethylene-acrylic acid copolymer, an ethylene-methacrylic acid copolymer, an ethylene-glycidyl methacrylate copolymer, or an ethylene-propylene copolymer (a copolymer containing ethylene as a constituent); or a resin such as polybutene is preferable as the polyolefin resin used in the composite material of the present invention. One kind of polyolefin resin may be used singly, or two or more kinds thereof may be used in combination. The polyolefin resin constituting the composite material of the present invention is preferably a polyethylene resin and/or a polypropylene resin, and more preferably a polyethylene resin.

Examples of the above polyethylene include a low density polyethylene (LDPE) and a high density polyethylene (HDPE).

The resin constituting the composite material of the present invention is preferably a polyolefin resin. The polyolefin in this polyolefin resin preferably contains polyethylene, and is more preferably a high density or low density polyethylene.

The above low density polyethylene means a polyethylene having a density of 880 kg/m$^3$ or more and less than 940 kg/m$^3$. The above high density polyethylene means a polyethylene having a density larger than the density of the above low density polyethylene.

The low density polyethylene may be so-called "low density polyethylene" or "ultralow density polyethylene" having long chain branching, or linear low density polyethylene (LLDPE) in which ethylene and a small amount of $\alpha$-olefin monomer are copolymerized, or further may be an "ethylene-$\alpha$-olefin copolymer elastomer" involved in the above density range.

When the resin constituting the composite material of the present invention is a polyolefin resin, the resin preferably contains polypropylene, and the polyolefin resin is also preferably polypropylene.

At least part of the polyolefin resin may be a modified resin. Examples of the modified resin include an acid-modified resin such as a maleic acid-modified resin. The acid-modified resin may be included to improve the adhesion between the resin and the fiber and increase the mechanical strength of the composite material. Thus, a small amount of fiber may be blended to increase the mechanical strength of the composite material and increase, as a result, the mechanical strength and fluidity of the composite material simultaneously.

The composite material of the present invention may contain a plurality of types of resins as described above. Further, for example, a polyolefin resin and polyethylene terephthalate and/or nylon may be used in combination. In this case, the total amount of the polyethylene terephthalate and/or nylon is preferably 10 parts by mass or less based on 100 parts by mass of the polyolefin resin.

The content of the resin in the composite material of the present invention is preferably 30 mass% or more, more preferably 40 mass% or more, and further preferably 50 mass% or more. Further, the content of the resin in the composite material of the present invention is usually less than 99 mass%, preferably less than 95 mass%, more preferably less than 90 mass%, or also preferably less than 85 mass%.

Incidentally, when the total content of the fiber and the resin in the composite material is less than 100 mass%, the remainder can contain, for example, components described later, if appropriate, according to the purpose or raw materials to be used.

The composite material of the present invention is preferably in the form in which aluminum in addition to the fiber is dispersed in the resin. The thermal conductivity, visibility, light shielding property, and lubricity of the composite material are improved by including aluminum. When aluminum is dispersed in the resin of the composite material of the present invention, the content of the aluminum in the composite material is preferably 1 mass% or more and 30 mass% or less. The processability of the composite material can be further improved by adjusting the content of the aluminum to a level within this range, and a lump of aluminum is unlikely to occur during processing of the composite material. This aluminum can be derived from a thin aluminum film layer of polyethylene laminated paper as a raw material. In the thin aluminum film layer of the polyethylene laminated paper, aluminum is not melted during melt-kneading, but is gradually sheared and micronized by shear force during kneading.

When thermal conductivity, flame retardancy, and the like are considered in addition to the viewpoint of the processability, the content of the aluminum in the composite material of the present invention is preferably 5 mass% or more and 20 mass% or less.

In the aluminum dispersed in the composite material of the present invention, the average of the X-Y maximum length of individual aluminum is preferably 0.02 to 2 mm and more preferably 0.04 to 1 mm. The X-Y maximum length is determined by observing the surface of the composite material. In this observation surface, an X-axis maximum length or a Y-axis maximum length, whichever is longer, is taken as the X-Y maximum length by drawing a straight line in a specific direction (X-axis direction) relative to the aluminum dispersoid to measure the maximum distance (X-axis maximum length) where a distance connecting lines between two intersection points at which the straight line intersects with an outer periphery of the aluminum dispersoid becomes maximum, and drawing another straight line in a direction (Y-axis direction) perpendicular to the specific direction to measure the maximum distance (Y-axis maximum length) where a distance connecting lines between the two intersection points at which the Y-axis direction line intersects with the outer periphery of the aluminum dispersoid becomes maximum. The X-Y maximum length can be determined by using image analysis software.

When the composite material contains aluminum, this aluminum preferably contains an aluminum dispersoid having an X-Y maximum length of 0.005 mm or more. The proportion of the number of aluminum dispersoids having an X-Y maximum length of 1 mm or more with respect to the number of aluminum dispersoids having an X-Y maximum length of 0.005 mm or more is preferably less than 1%. The processability of the composite material can be further improved by adjusting this proportion to a level less than 1%. Also, a lump of aluminum is unlikely to occur during processing of the composite material.

Further, lubricity can be improved by including aluminum. For example, even when formed sheets of the composite material as obtained by forming the composite material are layered, the formed sheets are unlikely to be closely adhered to each other, and thus are easily peeled. From the viewpoint of effectively exerting such effects of aluminum, aluminum in the composite material preferably has a scale-like structure, and further at least part of the aluminum preferably has a scale-like bent structure.

Furthermore, lubricity at normal temperature between moldings made of the composite material is improved by including aluminum, while adhesiveness during thermal fusion between the composite material and a metal is improved. When the composite material containing aluminum is thermally fused to aluminum foil, a peel strength of, for example, 1.0 N/10 mm or more between the aluminum foil and the composite material can be exhibited. This peel strength is the average of peel strengths observed when a sheet of the composite material and aluminum foil having a thickness of 0.1 mm are thermally fused at 170°C for 5 minutes at 1 kg/cm$^2$ by heat pressing, the resulting material is cut out into a strip having a width of 25 mm, and the aluminum foil is then peeled off at 23°C in the direction of 90° at a rate of 50 mm/min.

The composite material of the present invention can be shaped by further dispersing, in the polyolefin resin, resin particles different from the polyolefin resin. A composite material having further improved mechanical strength can be shaped by dispersing resin particles different from the polyolefin resin. The maximum diameter of the resin particles is preferably 10 $\mu$m or more and further preferably 50 $\mu$m or more. It is also preferable that the maximum diameter is 10 $\mu$m or more and the aspect ratio is 5 or more. In particular, the resin particle preferably has a scale-like shape, a maximum diameter of 10 $\mu$m or more, and an aspect ratio of 5 or more. In the composite material, the content of the resin particles is preferably 0.1 mass% or more and 30 mass% or less. Each resin particle preferably contains a resin having a melting point higher by 10°C or more than the melting point of the polyolefin resin which becomes a matrix. Each resin particle also preferably contains a resin having a melting point at 170°C or more and/or a resin exhibiting an endothermic peak at 170°C or more and 350°C or less measured by differential scanning calorimetry. This allows the resin particles to remain when the molding is formed by using the composite material, and thus makes it possible to further improve the strength of the resin composite material. Examples of the resin particles include resin particles made of at least one kind of polyethylene terephthalate, polybutylene terephthalate, and polyamide, and among them, polyethylene terephthalate is preferable.

Like in the case of using a resin other than the polyolefin resin as the matrix resin, it is possible to take a form in which resin particles different from the matrix resin are dispersed.

At least part of the above resin and/or fiber constituting the composite material of the present invention may be derived from a recycled material. At least part of the aluminum, polypropylene, polyethylene terephthalate, and/or nylon, which can be included in the composite material of the present invention, may also be derived from a recycled material. The production cost of the composite material can be reduced by utilizing the recycled material.

Preferable examples of the source for the fiber include wood, modified wood, a fiberboard, MDF (medium-density fiberboard), a particle board as well as furniture or a construct using them, and a material recovered therefrom, cutting waste, or waste at the time of production. In addition, examples also include wastepaper, broken paper of laminated paper, packaging using laminated paper, and paper sludge.

The resin source used may be, for instance, a regenerated resin. Specific examples thereof include each molded article (e.g., a bottle (e.g., a polyethylene bottle, a PET bottle), a container, a plastic furniture pipe, a sheet, a film, or a packaging container), a material recovered therefrom, and plastic waste discharged at the time of manufacturing the molded article. Other examples include a laminated sheet having a resin layer.

The recycled material used may be a polyolefin resin sheet, a sheet of resin different from the polyolefin resin or a laminate including a polyolefin resin sheet and a sheet of resin different from the polyolefin resin. Further, a laminate having a structure in which a thin aluminum film sheet is laminated on this laminate can be used as a recycled material. A pulverized material thereof, for example, can also be used. A packaging material (e.g., a food pack) with a laminate structure having a polyolefin resin sheet and a sheet of resin different from the polyolefin resin can also be used as a recycled material.

Examples of the recycled material include polyethylene laminated paper having paper and a thin polyethylene film layer, polyethylene laminated paper having paper, a thin polyethylene film layer, and a thin aluminum film layer, or a beverage pack and/or food pack made of these processed papers, or wastepaper, and recycled resin. Use of a plurality of types of these materials is possible. In addition, a cellulose fiber-attached polyethylene thin film piece obtained by processing the above laminated paper and/or beverage/food packaging by using a pulper to strip off and remove a paper portion (hereinafter, also referred to as "cellulose fiber-attached polyethylene thin film piece") may be used as the recycled material. When the laminated paper and/or the beverage/food pack have a thin aluminum film layer, aluminum is also adhered to the cellulose fiber-attached polyethylene thin film piece.

When such a recycled material is used as a raw material, the composite material of the present invention can also be obtained by, for example, melt-kneading described later.

In the composite material of the present invention, the moisture content is preferably less than 1 mass%. The moisture content is the weight loss (mass%) when a thermogravimetric analysis (TGA) is performed from 23°C to 120°C at a heating rate of +10°C/min under a nitrogen atmosphere within 6 hours after production of the composite material.

The composite material of the present invention may contain cellulose, hemicellulose (water-immiscible polysaccharides other than cellulose), and lignin. These cellulose, hemicellulose, and lignin may be derived from wood fiber (e.g., wood flour used as a raw material).

The composite material of the present invention may contain one or more kinds of compounds of a metal salt of an organic acid, an organic acid, and silicone. A composite material containing such a compound(s) has improved flowability during heating and has less forming defects during forming. Preferred examples of the compound include a metal salt of a fatty acid such as zinc stearate or sodium stearate, and a fatty acid such as oleic acid or stearic acid.

The composite material of the present invention may contain an inorganic material. Flexural modulus, impact resistance, and flame retardancy can be improved by including the inorganic material. Examples of the inorganic material include calcium carbonate, talc, clay, magnesium oxide, aluminum hydroxide, magnesium hydroxide, and titanium oxide.

The composite material of the present invention may contain a flame retardant, an antioxidant, a stabilizer, a weathering agent, a compatibilizer, an impact improver, or a modifier depending on the purpose. The composite material of the present invention can contain an oil component and/or various types of additives for improving processability. Examples thereof include paraffin, modified polyethylene wax, stearate, hydroxy stearate, a vinylidene fluoride-based copolymer such as a vinylidene fluoride-hexafluoropropylene copolymer, and/or organic modified siloxane.

The composite material of the present invention can also contain carbon black, or each pigment or dye. The composite material of the present invention can contain a metallic luster colorant. The composite material of the present invention can also contain an electrical conductivity-imparting component such as electrically conductive carbon black. Further, the composite material of the present invention can also contain a thermal conductivity-imparting component.

The composite material of the present invention may be crosslinked. Examples of the crosslinking agent include organic peroxide, and specific examples include dicumyl peroxide. The composite material of the present invention may be in a crosslinked form obtained by a silane crosslinking method.

The shape of the composite material of the present invention is not particularly limited. For example, the composite material of the present invention may be molded into a pellet form, or may also be formed into a desired shape. When the composite material of the present invention is shaped like a pellet, this pellet is suitable as a material constituting a molding (resin product).

The application of the composite material of the present invention is not particularly limited, and the composite material of the present invention can be widely used as any of various members or raw materials therefor.

[Production of fiber-dispersed resin composite material]

Subsequently, preferred embodiments of a method of producing the composite material of the present invention will be described below. The composite material of the present invention is not limited to those obtained by the following method as long as the specifics of the present invention are satisfied.

The composite material of the present invention can be in the form with a desired fiber length distribution by adjustment of the kneading condition upon kneading and addition of additives, or selection or adjustment of blending of a fiber material to be used. For example, the fiber length distribution of the fiber in the obtained composite material can be adjusted by, for instance, the kneading time, kneading speed, kneading temperature, addition amount of polar additive(s) such as water, and/or addition timing. At this time, the average fiber length of the fiber tends to change by kneading, and it is thus important to perform adjustment in consideration of this point. Alternatively, for example, the fiber material is classified in advance; and then, fiber in a specific fiber length size range may be used or fibers in different fiber length size ranges may be used in combination. In this way, the fiber length distribution of the fiber in the resulting composite material can be adjusted.

When the energy charge amount during kneading is increased by increasing the kneading time or kneading speed, the dispersibility of the fiber is increased to some extent, but the fiber length tends to be decreased. This reduction in fiber length disadvantageously acts in improvement of the mechanical strength of the composite material. That is, an increase in energy charge amount during kneading often results in a decrease in fiber length and a narrow fiber length distribution at the same time. Thus, they should be controlled to a desired range.

A typical kneading device such as a kneader or a twin screw extruder is applicable to the melt-kneading. Preferably, a batch-type kneading device such as a kneader can be applied to the melt-kneading. With the twin screw extruder, kneading becomes excessive in some cases, resulting in a short fiber length and too narrow distribution of the fiber length. Thus, the mechanical strength of the composite material is unlikely to be sufficiently increased in some cases.

A batch-type kneader such as a kneader may be used to easily control the cellulose fiber length and the fiber length distribution to a desired range. For example, when a kneader that is a batch-type kneader is used, water may be added to set the fiber length distribution to a desired range. In particular, it is effective to add a large amount of water (water volume larger than the blending amount of the resin) in the middle of melt-kneading in order to realize a desired fiber length distribution.

On the other hand, when water is added from the beginning at the time of kneading, the fiber length distribution in the resulting composite material becomes narrow, and the mechanical strength of the composite material tends to be poor. This is because the time during which the fiber is in contact with water while the resin is not melted increases, as a result of which the action of water on the fiber becomes excessive. Meanwhile, depending on the kind of the fiber material to be used, for example, when wood flour is used, the fiber length distribution of the composite material tends to be narrow, probably because the shear force is easily and excessively transmitted to the fiber even if no water is added.

The addition of water, etc., can be performed, for example, when 113 to 1/2 of the entire melt-kneading time has elapsed. In addition, the amount of water added is preferably large to some extent, and can be about 1 to 3 times the blending amount of the resin on a mass basis.

Here, "melt-kneading" means kneading at a temperature at which the resin (thermoplastic resin) in the raw material is melted. The melt-kneading is preferably performed at a temperature and treatment time at which the fiber is not deteriorated. The wording "the fiber is not deteriorated" means that no significant discoloration, burning, or carbonization occurs in the fiber.

The temperature during the melt-kneading (the temperature of the melt-kneaded product) in the case of using, for example, a polyethylene resin is preferably from 110 to 280°C, more preferably from 130 to 220°C, also preferably from 150 to 220°C, or also preferably from 170 to 210°C. In addition, the melt-kneading time can be set to, for example, about 5 minutes to 1 hour, preferably 7 to 30 minutes, or preferably 10 to 25 minutes. Further, the melt-kneading time in the presence of water is preferably 3 minutes or more, more preferably 5 minutes or more, or also preferably 10 minutes or more.

In particular, when a wood fiber material such as wood flour is used as a fiber source, a composite material having a desired fiber length distribution can be obtained with high efficiency by melt-kneading in the presence of water described above.

[Molding]

The molding of the present invention is a molding formed by molding the composite material of the present invention into a desired shape. Examples of the molding of the present invention include a molding with each structure such as a sheet form, a plate form, and a tubular form. Examples of the tubular molding include a straight tube with a substantially cylindrical or square cross section, a curved tube, or a corrugated tube having a corrugated shape imparted. Examples of the tubular molding also include a divided body obtained by dividing the tubular molding (e.g., the straight tube with a substantially cylindrical or square cross section, the curved tube, the corrugated tube having a corrugated shape) into two pieces, for example. The molding of the present invention can also be used as a joint member for the tube as well as a member for civil engineering, building materials, automobiles, or protection of electrical cables. The molding of the present invention can be obtained by subjecting the composite material of the present invention to ordinary forming means such as injection molding, extrusion molding, press molding, or blow molding.

[Composite member]

A composite member can be obtained by combining the molding of the present invention and another material (component). The form of this composite member is not particularly limited. For example, the composite member can be a composite member having a laminate structure in which a layer composed of the molding of the present invention and a layer composed of another material are combined. This composite member preferably has a tubular structure. Further, examples of the other material constituting the composite member in combination with the molding of the present invention include a thermoplastic resin material and a metal material.

For example, the composite material of the present invention can be used for being joined to a metal to form a composite. This composite can be a laminate including a layer of the composite material of the present invention and a metal layer. The composite is also preferably a coated metal tube having a coating layer, in which the composite material of the present invention is used on the outer circumference and/or inner circumference of a metal tube. The coated metal tube can be used as, for example, an electromagnetic wave shielding tube. The composite material of the present invention and metal are preferably joined in the form in which both are directly bonded. This joining can be performed by a routine method such as thermal fusing. The composite material of the present invention can also be used as an adhesive sheet. For example, in order to bond metal and a polyolefin resin material, the composite material of the present invention can be used as an adhesive resin layer by interposing the composite material between the metal and the polyolefin resin material. Further, the composite material of the present invention can be used as a hot melt adhesive.

The composite member of the present invention can be suitably used as a member for civil engineering, building materials or automobiles, or a raw material for these members.

When the composite material of the present invention is joined to metal to form a composite, the type of the metal is not particularly limited. The metal preferably contains at least one kind of compound of aluminum, copper, steel, an aluminum alloy, a copper alloy, stainless steel, a magnesium alloy, a lead alloy, silver, gold, and platinum. Among them, preferably, the metal contains at least one kind of compound of aluminum, an aluminum alloy, copper, and a copper alloy, and more preferably, the metal is at least one kind of compound of aluminum, an aluminum alloy, copper, and a copper alloy. The metal also preferably contains aluminum and/or an aluminum alloy, and is also preferably aluminum and/or an aluminum alloy.

EXAMPLES

The present invention will be described in more detail based on Examples. However, the present invention is not limited to them.

[Measurement protocol/Evaluation procedure]

<Fiber content in composite material>

A composite material sample (10 mg) which had been dried in advance under the atmosphere at 80°C × 1 hour was subjected to a thermogravimetric analysis (TGA) from 23°C to 400°C under a nitrogen atmosphere at a heating rate of +10°C/min. Then, the content of fiber (mass%) was calculated by [Formula I] below. Five identical composite material samples were prepared, and the fiber contents (mass%) of the five composite material samples were averaged. Then, the average was taken as the content (mass%) of fiber in the composite material. In the composite materials of Examples or Comparative Examples, the raw material-derived fiber is plant fiber.

[Formula I]

(content [mass%] of plant fiber) = (decrease [mg] in mass of composite material sample at 200 to 380°C) × 100/(mass [mg] of composite material sample in dried state before thermogravimetric analysis)

<Length-weighted average fiber length and Number-averaged fiber length>

The length-weighted average fiber length and the number-averaged fiber length were measured for a hot xylene dissolution residue (insoluble component) of the composite material in accordance with Pulps-Determination of fiber length by automated optical analysis as specified by ISO 16065 2001 (JIS P8226 2006). Specifically, 0.1 to 1 g was cut out from a formed sheet of the composite material and taken as a sample, and this sample was wrapped with a 400-mesh stainless steel mesh, and immersed into 100 mL of xylene at 138°C for 24 hours. Next, the sample was pulled up therefrom, and the sample was then dried in vacuum at 80°C for 24 hours. The length-weighted average fiber length, number-averaged fiber length, and weight-weighted average fiber length were determined by using the hot xylene dissolution residue (insoluble component) of the composite material thus obtained, in accordance with the Pulps-Determination of fiber length by automated optical analysis. MORFI COMPACT, manufactured by TECHPAP, was used in this measurement.

<Tensile strength]>

A test piece was prepared by injection molding the composite material, and tensile strength was measured for a No. 2 test piece in accordance with JIS K7113 1995. A unit is "MPa".

<Flexural strength and flexural modulus]>

Flexural strength and flexural modulus were measured for a 4 mm-thick sample at a flexural rate of 2 mm/min in accordance with JIS K7171 2016. More specifically, a test piece (thickness: 4 mm, width: 10 mm, and length: 80 mm) was prepared by injection molding, a load was applied to the test piece with a span of 64 mm, a curvature radius of 5 mm at a supporting point and an action point, and a test speed of 2 mm/min, and a flexural test was conducted in accordance with JIS K7171 2016. In this way, flexural strength (MPa) and flexural modulus (MPa) were determined.
Here, the flexural modulus Ef can be determined by determining flexural stress $\sigma f1$ measured at a deflection amount in strain 0.0005 ($\varepsilon f1$) and flexural stress $\sigma f2$ measured at a deflection amount in strain 0.0025 ($\varepsilon f2$), and dividing a difference therebetween by a difference between respective amounts of strain corresponding thereto, namely, according to the following formula:

$$Ef = (\sigma f2 - \sigma f1)/(\varepsilon f2 - \varepsilon f1).$$

In this case, the deflection amount S for determining the flexural stress can be determined according to the following formula:

$$S = (\varepsilon \cdot L^2)/(6 \cdot h),$$

where

S is deflection,
$\varepsilon$ is flexural strain,
L is span, and
h is thickness.

<Melt flow rate (MFR)>

A melt flow rate was measured under conditions: temperature = 230°C, and load = 5 kg in accordance with JIS K7210. A unit of MFR is "g/10 minutes".
The following composite materials were prepared using a kneader, which was a batch-type kneader, as a melt-kneading apparatus at a kneading temperature of 180 to 200°C and a kneading time of 10 to 20 minutes. Provided that in Examples 8 to 10 and Comparative Examples 6 to 8, the kneading temperature was from 160 to 180°C. The following describes how to prepare the composite material of each of Examples or Comparative Examples.

<Example 1>

Polypropylene 1 (J108M, Prime Polymer) and fiber material 1 (wood flour 1; average major diameter: 1.8 mm; moisture content: 15%) were mixed at a blend ratio (unit: parts by mass) shown in the upper rows of Table 1, and melt-kneaded using a kneader to produce a composite material in which the respective components were homogeneously mixed. In this melt-kneading, 120 parts by mass of water was added at the time when 1/2 of the kneading time had elapsed. The fiber-dispersed resin composite material of Example 1 was thus obtained.
Incidentally, in this Example 1, and later Examples and Comparative Examples, the moisture content of each of the obtained composite materials was less than 1 mass%.

<Example 2>

Polypropylene 1 (J108M, Prime Polymer), fiber material 1 (wood flour 1; average major diameter: 1.8 mm; moisture content: 15%), and maleic acid-modified polypropylene 1 (M-PP1) (RIKEAID, RIKEN VITAMIN CO., LTD) were mixed at a blend ratio (unit: parts by mass) shown in the upper rows of Table 1, and melt-kneaded using a kneader to produce a composite material in which the respective components were homogeneously mixed. In this melt-kneading, 120 parts by mass of water was added at the time when 1/2 of the kneading time had elapsed. The fiber-dispersed resin composite material of Example 2 was thus obtained.

<Example 3>

Fiber material 1 (wood flour 1; average major diameter: 1.8 mm; moisture content: 15%) and the same amount of water were injected into a rotary cutter mill. Next, the resulting pulverized material, polypropylene 1 (J108M, Prime Polymer Co., Ltd.), and maleic acid-modified polypropylene 1 (M-PP1) (RIKEAID, RIKEN VITAMIN CO., LTD) were added and mixed at a blend ratio (unit: parts by mass) shown in the upper rows of Table 1, and melt-kneaded using a kneader to produce a composite material in which the respective components were homogeneously mixed. In this melt-kneading, 120 parts by mass of water was added at the time when 1/2 of the kneading time had elapsed. The fiber-dispersed resin composite material of Example 3 was thus obtained.

<Example 4>

Polypropylene 1 (J108M, Prime Polymer) and fiber material 3 (wood flour 2; average major diameter: 3 mm; moisture content: 15%) were mixed at a blend ratio (unit: parts by mass) shown in the upper rows of Table 1, and melt-kneaded using a kneader to produce a composite material in which the respective components were homogeneously mixed. In this melt-kneading, 120 parts by mass of water was added at the time when 1/2 of the kneading time had elapsed. The fiber-dispersed resin composite material of Example 4 was thus obtained.

<Comparative Example 1>

Polypropylene 1 (J108M, Prime Polymer) and fiber material 1 (wood flour 1; average major diameter: 1.8 mm; moisture content: 15%) were mixed at a blend ratio (unit: parts by mass) shown in the upper rows of Table 1, and melt-kneaded using a kneader in the absence of water to produce a composite material in which the respective components were homogeneously mixed. The fiber-dispersed resin composite material of Comparative Example 1 was thus obtained.

<Comparative Example 2>

Polypropylene 1 (J108M, Prime Polymer) and fiber material 2 (paper 1 obtained by pulverizing office paper by using a mill with a mesh diameter $\varphi$ of 5 mm) were mixed at a blend ratio (unit: parts by mass) shown in the upper rows of Table 1, and melt-kneaded using a kneader in the absence of water to produce a composite material in which the respective components were homogeneously mixed. The fiber-dispersed resin composite material of Comparative Example 2 was thus obtained.

The results of the respective Examples and Comparative Examples are shown in the following table.

[Table 1]

Table 1

|  | Ex. 1 | Ex. 2 | Ex. 3 | Ex. 4 | CEx. 1 | CEx. 2 |
|---|---|---|---|---|---|---|
| Polypropylene 1 (parts by mass) | 50 | 47.5 | 47.5 | 50 | 50 | 50 |
| Fiber material 1 (parts by mass) | 50 | 50 | 50 | - | 50 | - |
| Fiber material 2 (parts by mass) | - | - | - | - | - | 50 |
| Fiber material 3 (parts by mass) | - | - | - | 50 | - | - |
| M-PP1 (parts by mass) | - | 2.5 | 2.5 | - | - | - |
| Fiber content (mass%) | 27.0 | 27.4 | 27.3 | 27.5 | 27.1 | 32.1 |
| Length-weighted average fiber length LL /Number-averaged fiber length LN | 1.09 | 1.09 | 1.05 | 1.17 | 1.01 | 1.35 |
| Length-weighted average fiber length LL ($\mu$m) | 333 | 337 | 297 | 374 | 289 | 639 |
| Number-averaged fiber length LN ($\mu$m) | 306 | 309 | 282 | 320 | 286 | 473 |

(continued)

|  | Ex. 1 | Ex. 2 | Ex. 3 | Ex. 4 | CEx. 1 | CEx. 2 |
|---|---|---|---|---|---|---|
| Tensile strength (MPa) | 40.1 | 63.7 | 53.5 | 38.2 | 34.7 | 36.5 |
| Flexural strength (MPa) | 54.4 | 86.8 | 77.0 | 49.1 | 45.4 | 47.7 |
| MFR (10 g/minute) | 3.1 | 10.2 | 37.8 | 1.3 | 3.4 | 0.08 |
| Remarks: 'Ex.' means Example according to this invention, and 'CEx.' means Comparative Example. | | | | | | |

As shown in Table 1 above, each composite material having an LL/LN of more than 1.01 according to the present invention exhibited high values in both tensile strength and flexural strength (compare, in particular, between Example 1 and Comparative Example 1). In addition, it is found that the composite material having an LL/LN of less than 1.30 according to the present invention has high mechanical strength and greatly enhanced MFR, and exhibits practical fluidity. It is also found that this fluidity is further enhanced by setting LL/LN to 1.10 or less.

<Examples 5 to 7>

Polypropylene 1 (J108M, Prime Polymer) and fiber material 1 (wood flour 1; average major diameter: 1.8 mm; moisture content: 15%) were mixed at a blend ratio (unit: parts by mass) shown in the upper rows of Table 2, and melt-kneaded using a kneader to produce each composite material in which the respective components were homogeneously mixed. In this melt-kneading, 120 parts by mass of water was added at the time when 1/2 of the kneading time had elapsed. The fiber-dispersed resin composite materials of Examples 5 to 7 were thus obtained.

<Comparative Examples 3 to 5>

Polypropylene 1 (J108M, Prime Polymer) and fiber material 1 (wood flour 1; average major diameter: 1.8 mm; moisture content: 15%) were mixed at a blend ratio (unit: parts by mass) shown in the upper rows of Table 2, and melt-kneaded using a kneader in the absence of water to produce each composite material in which the respective components were homogeneously mixed. The fiber-dispersed resin composite materials of Comparative Example 3 to 5 were thus obtained.

The results of the respective Comparative Examples are shown in the following table.

[Table 2]

Table 2

|  | Ex. 5 | Ex. 6 | Ex. 7 | CEx. 3 | CEx. 4 | CEx. 5 |
|---|---|---|---|---|---|---|
| Polypropylene 1 (parts by mass) | 80 | 70 | 40 | 80 | 70 | 40 |
| Fiber material 1 (parts by mass) | 20 | 30 | 60 | 20 | 30 | 60 |
| Fiber material 2 (parts by mass) | - | - | - | - | - | - |
| Fiber material 3 (parts by mass) | - | - | - | - | - | - |
| M-PP1 (parts by mass) | - | - | - | - | - | - |
| Fiber content (mass%) | 10.9 | 16.3 | 22.1 | 11.1 | 16.6 | 22.5 |
| Length-weighted average fiber length LL /Number-averaged fiber length LN | 1.10 | 1.08 | 1.07 | 1.01 | 1.01 | 1.01 |
| Length-weighted average fiber length LL ($\mu$m) | 351 | 342 | 326 | 334 | 321 | 311 |
| Number-averaged fiber length LN ($\mu$m) | 319 | 312 | 305 | 330 | 318 | 307 |
| Tensile strength (MPa) | 25.4 | 38.7 | 50.1 | 22.4 | 32.5 | 42.7 |
| Flexural strength (MPa) | 28.9 | 42.1 | 53.2 | 24.5 | 36.4 | 44.8 |

(continued)

| | Ex. 5 | Ex. 6 | Ex. 7 | CEx. 3 | CEx. 4 | CEx. 5 |
|---|---|---|---|---|---|---|
| Flexural modulus (MPa) | 3511 | 4121 | 5213 | 3127 | 3871 | 4825 |
| MFR (10 g/minute) | 20.2 | 11.3 | 1.1 | 43.3 | 24.1 | 8.9 |
| Remarks: 'Ex.' means Example according to this invention, and 'CEx.' means Comparative Example. | | | | | | |

As shown in Table 2, the composite materials having an LL/LN of more than 1.01 according to the present invention exhibited high values in all of the tensile strength, the flexural strength, and the flexural modulus (comparison between Example 5 and Comparative Example 3, comparison between Example 6 and Comparative Example 4, and comparison between Example 7 and Comparative Example 5).

<Examples 8 to 10>

Pulverized film material 1 (obtained using a mill with a mesh diameter $\varphi$ of 10 mm) from a packaging container formed of a laminated film (LDPE : nylon = 95 : 5) and fiber material 1 (wood flour 1; average major diameter: 1.8 mm; moisture content: 15%) were mixed at a blend ratio (unit: parts by mass) shown in the upper rows of Table 3, and melt-kneaded using a kneader to produce each composite material in which the respective components were homogeneously mixed. In this melt-kneading, 150 parts by mass of water was added at the time when 1/2 of the kneading time had elapsed. The fiber-dispersed resin composite materials of Examples 8 to 10 were thus obtained.

<Comparative Examples 6 to 8>

Pulverized material 1 (obtained using a mill with a mesh diameter $\varphi$ of 10 mm) from a packaging container formed of a laminated film (LDPE : nylon = 95 : 5) and fiber material 1 (wood flour 1; average major diameter: 1.8 mm; moisture content: 15%) were mixed at a blend ratio (unit: parts by mass) shown in the upper rows of Table 3, and melt-kneaded using a kneader in the absence of water to produce each composite material in which the respective components were homogeneously mixed. The fiber-dispersed resin composite materials of Comparative Examples 6 to 8 were thus obtained.

[Table 3]

Table 3

| | Ex. 8 | Ex. 9 | Ex. 10 | CEx. 6 | CEx. 7 | CEx. 8 |
|---|---|---|---|---|---|---|
| Pulverized film material 1 (parts by mass) | 70 | 50 | 40 | 70 | 50 | 40 |
| Fiber material 1 (parts by mass) | 30 | 50 | 60 | 30 | 50 | 60 |
| Fiber material 2 (parts by mass) | - | - | - | - | - | - |
| Fiber material 3 (parts by mass) | - | - | - | - | - | - |
| M-PP1 (parts by mass) | - | - | - | - | - | - |
| Fiber content (mass%) | 10.5 | 16.1 | 21.8 | 11.1 | 16.5 | 22.1 |
| Length-weighted average fiber length LL /Number-averaged fiber length LN | 1.08 | 1.07 | 1.05 | 1.01 | 1.01 | 1.01 |
| Length-weighted average fiber length LL ($\mu$m) | 345 | 330 | 321 | 327 | 273 | 265 |
| Number-averaged fiber length LN ($\mu$m) | 319 | 308 | 306 | 323 | 270 | 262 |
| Tensile strength (MPa) | 16.3 | 19.2 | 20.4 | 12.4 | 15.8 | 16.1 |
| Flexural strength (MPa) | 20.4 | 24.2 | 25.9 | 18.4 | 21.3 | 22.7 |
| Flexural modulus (MPa) | 1621 | 2517 | 3135 | 1593 | 2466 | 2981 |

(continued)

|  | Ex. 8 | Ex. 9 | Ex. 10 | CEx. 6 | CEx. 7 | CEx. 8 |
|---|---|---|---|---|---|---|
| MFR (10 g/minute) | 38.3 | 10.9 | 2.1 | 37.2 | 11.5 | 3.7 |
| Remarks: 'Ex.' means Example according to this invention, and 'CEx.' means Comparative Example. | | | | | | |

As shown in Table 3, the composite materials having an LL/LN of more than 1.01 according to the present invention exhibited high values in all of the tensile strength, the flexural strength, and the flexural modulus (compare between Example 8 and Comparative Example 6, between Example 9 and Comparative Example 7, and between Example 10 and Comparative Example 8).

Having described our invention as related to the present embodiments, it is our intention that the invention should not be limited by any of the details of the description, unless otherwise specified, but rather be construed broadly within its spirit and scope as set out in the accompanying claims.

The present application claims priority of Patent Application No. 2020-100884, filed in Japan on June 10, 2020, which is herein incorporated by reference as part of the present specification.

## Claims

1. A fiber-dispersed resin composite material, comprising fiber dispersed in a resin,

   wherein the content of the fiber in the fiber-dispersed resin composite material is a content of 1 mass% or more and less than 70 mass%, and
   wherein when a length-weighted average fiber length and a number-averaged fiber length of the fiber as determined under conditions below are set to LL and LN, respectively, LL and LN satisfy [Expression 1-1] below:
   <Conditions>
   LL and LN are determined for a dissolution residue obtained by immersing the fiber-dispersed resin composite material in a solvent miscible with the resin in the composite material, in accordance with Pulps-Determination of fiber length by automated optical analysis as specified by ISO 16065 2001, and

$$[\text{Expression 1-1}] \qquad 1.01 < LL/LN < 1.30.$$

2. The fiber-dispersed resin composite material according to claim 1, wherein the LL and the LN satisfy [Expression 1-3] below:

$$[\text{Expression 1-3}] \qquad 1.02 < LL/LN \leq 1.10.$$

3. The fiber-dispersed resin composite material according to claim 1 or 2, wherein a length-weighted average fiber length of the fiber is 0.25 mm or more.

4. The fiber-dispersed resin composite material according to any one of claims 1 to 3, wherein the content of the fiber in the fiber-dispersed resin composite material is 5 mass% or more and less than 50 mass%.

5. The fiber-dispersed resin composite material according to any one of claims 1 to 4, wherein the fiber comprises plant fiber.

6. The fiber-dispersed resin composite material according to any one of claims 1 to 5, wherein the fiber comprises wood fiber.

7. The fiber-dispersed resin composite material according to claim 6,
   wherein the wood fiber comprises cellulose, hemicellulose, and lignin.

8. The fiber-dispersed resin composite material according to any one of claims 1 to 7, wherein the resin comprises one or two or more kinds of a polyolefin resin, an acrylonitrile-butadiene-styrene copolymer resin, an acrylonitrile-styrene copolymer resin, a polyamide resin, a polyvinyl chloride resin, a polyethylene terephthalate resin, a polybutylene terephthalate resin, a polystyrene resin, a 3-hydroxybutyrate-co-3-hydroxyhexanoate polymer resin, a polybutylene succinate resin, and a polylactic acid resin.

9. The fiber-dispersed resin composite material according to any one of claims 1 to 8,

wherein the resin comprises a polyolefin resin, and
wherein under the conditions determining the LL and the LN, the dissolution residue obtained by immersing the fiber-dispersed resin composite material in a solvent miscible with the resin in the fiber-dispersed resin composite material is a hot xylene dissolution residue.

10. The fiber-dispersed resin composite material according to any one of claims 1 to 9, comprising aluminum dispersed in the resin.

11. The fiber-dispersed resin composite material according to any one of claims 1 to 10, comprising one or more kinds of compound of a metal salt of an organic acid, an organic acid, and silicone.

12. The fiber-dispersed resin composite material according to any one of claims 1 to 11, comprising resin particles dispersed in the resin dispersing the fiber contained in the fiber-dispersed resin composite material,
wherein the resin particles are made of a resin different from the resin dispersing the fiber contained in the fiber-dispersed resin composite material.

13. The fiber-dispersed resin composite material according to any one of claims 1 to 12, wherein at least part of the resin and/or at least part of the fiber is derived from a recycled material.

14. A molding, which is obtainable by using the fiber-dispersed resin composite material according to any one of claims 1 to 13.

15. A composite member, comprising: the molding according to claim 14; and another material in combination.

## INTERNATIONAL SEARCH REPORT

International application No.

PCT/JP2021/021688

### A. CLASSIFICATION OF SUBJECT MATTER

B29B 11/16(2006.01)i; B29K 105/12(2006.01)n; C08K 7/02(2006.01)i; C08L 101/00(2006.01)i

FI: B29B11/16; C08L101/00; C08K7/02; B29K105:12

According to International Patent Classification (IPC) or to both national classification and IPC

### B. FIELDS SEARCHED

Minimum documentation searched (classification system followed by classification symbols)

B29B11/16; B29K105/12; C08K7/02; C08L101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-210407 A (FURUKAWA ELECTRIC CO., LTD.) 12 December 2019 (2019-12-12) claims, examples 1-20 | 1-15 |
| A | JP 2019-203137 A (FURUKAWA ELECTRIC CO., LTD.) 28 November 2019 (2019-11-28) claims, examples 1-70 | 1-15 |
| A | JP 2016-35123 A (OJI HOLDINGS CORPORATION) 17 March 2016 (2016-03-17) paragraph [0017] | 1-15 |
| A | JP 2015-59292 A (OJI HOLDINGS CORPORATION) 30 March 2015 (2015-03-30) paragraphs [0030]-[0031] | 1-15 |
| A | WO 2013/015323 A1 (OJI HOLDINGS CORPORATION) 31 January 2013 (2013-01-31) paragraphs [0075]-[0076] | 1-15 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 August 2021 (27.08.2021) | 07 September 2021 (07.09.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 4 166 299 A1**

**INTERNATIONAL SEARCH REPORT**

| International application No. |
| --- |
| PCT/JP2021/021688 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2019-534397 A (CENTRE TECHNIQUE DE L'INDUSTRIE, DES PAPIERS, CARTONS ET CELLULOSES) 28 November 2019 (2019-11-28) fig. 2 | 1-15 |

Form PCT/ISA/210 (continuation of second sheet) (January 2015)

20

**INTERNATIONAL SEARCH REPORT**
Information on patent family members

International application No.

PCT/JP2021/021688

| Patent Documents referred in the Report | Publication Date | Patent Family | Publication Date |
|---|---|---|---|
| JP 2019-210407 A | 12 Dec. 2019 | (Family: none) | |
| JP 2019-203137 A | 28 Nov. 2019 | US 2020/0079920 A1 claims, examples 1-80 WO 2018/105173 A1 EP 3549980 A1 CN 110023400 A | |
| JP 2016-35123 A | 17 Mar. 2016 | (Family: none) | |
| JP 2015-59292 A | 30 Mar. 2015 | (Family: none) | |
| WO 2013/015323 A1 | 31 Jan. 2013 | CN 103732826 A TW 201313988 A | |
| JP 2019-534397 A | 28 Nov. 2019 | WO 2018/099977 A1 fig. 2 EP 3387186 A1 FR 3059345 A1 CN 110050097 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012070616 A
- JP 61225234 A
- JP 2003277621 A
- JP 2020100884 A